# EUROPÄISCHE PATENTSCHRIFT

(11) **EP 0 555 187 B1**
(45) Veröffentlichungstag und Bekanntmachung des Hinweises auf die Patenterteilung: **07.12.1994**
(21) Anmeldenummer: 93810067.4
(22) Anmeldetag: 03.02.1993
(51) Int. Cl.: F16L 3/24, H02G 3/04

(54) **Befestigungsschiene, insbesondere für Kabel und Elektrorohre**
Fastening rail, especially for cables and cable ducts
Rail de fixation, notamment pour câbles et canalisations de câble

(30) Priorität: 04.02.1992 CH 316/92
(43) Veröffentlichungstag der Anmeldung: 11.08.1993
(73) Patentinhaber: Gantenbein, Ulrich, 9472 Grabs (CH)
(72) Erfinder: Gantenbein, Ulrich, 9472 Grabs (CH)
(74) Vertreter: Riederer, Conrad A., Dr.

(56) Entgegenhaltungen:
- CH-A- 348 737
- DE-A- 2 164 991
- DE-C- 675 892
- US-A- 3 132 831
- ELEKTRO-TECHNIK Bd. 14, 26. April 1967, Seite 27 'DAHL-KANAL VERDRAHTUNGSSYSTEM' & DAHL-KANAL KATALOG 1. Mai 1990, Seiten 277 - 318 'VERDRAHTUNGSKANAL'

## Beschreibung

Die Erfindung betrifft eine Befestigungsschiene zur Befestigung von Gegenständen, insbesondere von Kabeln oder Rohren.

Im Handel ist ein doppelkammförmiges Montageelement aus Kunststoff für die Kabelführung in Hohlböden und Steigzonen erhältlich. Dieses Montageelement besteht aus einem etwa 25 Zentimeter langem flachen Kunststoffkörper, welcher auf beiden Seiten senkrecht zur Längsrichtung abstehende Lappen aufweist, an welchen die einzelnen Kabel mit üblichen Kabelbindern befestigt werden können. Solche Kabelbinder bestehen in der Regel aus einem Kunststoffband, welches an einem Ende einen Verschluss aufweist, in welchen das andere Ende des Bandes eingeführt werden kann. In der Mitte weist das Montageelement in Abständen voneinander angeordnete Löcher auf, mit welchem es beispielsweise durch Dübelnägel am Einsatzort befestigt werden kann. Da dieses Montageelement im Kunststoffspritzverfahren hergestellt werden muss, ist seine Länge notgedrungen begrenzt. Es ist auch nicht sehr stabil und erfordert daher kurze Befestigungsabstände. Zudem hat es den Nachteil, dass es wegen der geringen Stabilität nicht freitragend verwendbar ist. Es kann sich auch verbiegen, wenn es auf einer unebenen Unterlage befestigt wird. Es eignet sich auch nur für die Befestigung von relativ leichten Kabeln und Rohren, wobei die Befestigung dieser Gegenstände lediglich mit Kabelbindern erfolgen kann. Diese dürfen nicht stark angezogen werden, weil sich sonst die Lappen verbiegen. Schliesslich besteht die Gefahr, dass die Kabelbinder von den Lappen wegrutschen, wenn Zugkräfte auf die Kabel oder Elektrorohre einwirken.

Die US-A-3,132,831 zeigt eine U-förmige Schiene, deren Schenkel eine Vielzahl von T-förmigen Ausstanzungen aufweisen. Durch diese Ausstanzungen werden eine Vielzahl von Fingern gebildet, welche ebenfalls T-förmig sind. Diese Finger dienen der Befestigung einer U-förmigen Metall-Schelle zur Halterung des Kabels oder Rohrs. Die Schelle kann durch Anziehen der im Bereich des U-Bogens angeordneten, gegen das zu befestigende Kabel beweglichen Schraube mit der U-förmigen Schiene verbunden werden. Um eine Verbindung zwischen der Schelle und der Schiene zu ermöglichen, sind die Schenkel des U nach innen widerhakenförmig abgebogen. Diese Widerhaken dienen dazu, am T-Balken der T-förmigen Finger einzurasten, wenn die Schelle mit der U-Oeffnung nach unten auf die Befestigungsschiene aufgesetzt und die Schraube am U-Bogen angezogen wird.

Die beschriebene Schiene eignet sich nur zur Befestigung von Kabeln und Rohren mit der beschriebenen Schelle, nicht aber zur Befestigung solcher Gegenstände mit den üblichen Kabelbindern, welche in der Regel der Form von Bändern aus Kunststoff besitzen.

Die DE-A 21 64 991 und die CH-A-348 737 zeigen Befestigungsschienen, die lediglich mit U-förmigen Briden oder Bügelschellen aus Metall verwendbar sind, nicht aber mit den üblichen billigen Kabelbindern aus Kunststoff. Diese Schienen besitzen einen Schienenkörper von U-förmigem Profil, welcher einen Kanal zur Aufnahme der Bügelschellen oder ähnlichen Befestigungsmitteln dient. Für die zu befestigenden Gegenständen ist eine Auflagefläche zu beiden Seiten des Kanals vorhanden. Während sich beim Gegenstand der DE-A-21 64 991 Halteflansche von der Auflagefläche nach unten in den Kanal erstrecken, ragen beim Gegenstand der CH-A-348 737 Zähne von den Enden der Schenkel des U nach innen und bilden Teil der Auflagefläche. In beiden Fällen dienen die Zähne bzw. Halteflansche der Verankerung der in den Kanal eingeführten Bügelschellen.

Die DE-A-675 892 zeigt eine Kabelleiste, welche aus einem in der Längsrichtung umgebogenen Blechstreifen besteht, der an der Auflagestelle der Kabel kammartig mit Zähnen versehen ist. An diesen Zähnen können Kabel z.B. mit Hilfe eines Metallbandes befestigt werden. Diese Kabelleiste kann nicht zusammen mit Metallschellen oder sogenannten Schnellverlegebügeln verwendet werden und legt dies auch nicht nahe, zumal die Oeffnung des U-förmigen Kabelleistenprofils in der gleichen Richtung wie jene der Zähne oder Finger verläuft.

Es ist daher Aufgabe der vorliegenden Erfindung, eine Befestigungsschiene zu schaffen, welche universell und rationell für die Befestigung von leichten und schweren Gegenständen, wie z.B. Kabel und Elektrorohre, verwendbar ist. Die Befestigungsschiene soll auch die vorangehend angeführten Nachteile bekannter Montageelemente mindestens teilweise vermeiden.

Zur Lösung dieser Aufgabe sieht die Erfindung eine Befestigungsschiene mit der in Anspruch 1 beschriebenen Kombination von Merkmalen vor.

Die erfindungsgemässe Befestigungsschiene hat den Vorteil, dass sie für die Befestigung von Kabeln und Elektrorohren sowohl mit Kabelbindern als auch mit Schnellverlegerbügeln verwendbar ist. Es ist auch möglich, gesetzlich vorgeschriebene Ordnungstrennbolzen auf der ganzen Schienenlänge mit im Handel erhältlichen Nutensteinen zu befestigen. Durch die Verwendung von Kabelbindern anstelle von Schnellverlegerbügeln können erhebliche Einsparungen erzielt werden, weil Kabelbinder in der Regel mindestens zehnmal billiger sind als Schnellverlegerbügel und sich eine kürzere Montagezeit ergibt. Andererseits ist die Verwendung von Schnellverlegerbügeln aber nicht ausgeschlossen, wenn z.B. ein schweres Kabel befestigt werden muss.

Es ist vorteilhaft, wenn die Finger an den Enden der Schenkel des U angeordnet sind. Sie stellen dann eine Vergrösserung der Auflagefläche dar.

Die Finger können an ihren äusseren Enden Auskragungen aufweisen, um zu verhindern, dass bei Zug am Kabel oder Rohr die Kabelbinder von den Fingern gleiten.

Der Schienenkörper weist vorteilhaft am Boden eine Vielzahl von in Abständen voneinander angeordneten Löchern, vorzugsweise Langlöchern, auf. Diese Löcher können gleichzeitig mit dem Stanzen der Ausnehmungen zur Bildung der Finger hergestellt werden, so dass praktisch kein zusätzlicher Aufwand zur Bildung der Langlöcher anfällt. Durch die Vielzahl der Langlöcher wird die Montage der Befestigungsschiene auf dem Bau erheblich erleichtert, da keine Löcher in die Befestigungsschiene gebohrt werden müssen.

Vorteilhaft besteht die Befestigungsschiene aus Metall, z.B. Aluminium oder aus einer Aluminiumlegierung.

Die Verwendung solcher Schienen erübrigt die Notwendigkeit einer besonderen Erdung der Abschirmung von abgeschirmten Kabeln, da ein galvanischer Kontakt zwischen der Schiene und der Abschirmung besteht. Auch haben solche Schienen eine erheblich grössere Stabilität als das bekannte Montageelement aus Kunststoff und eignen sich daher auch für eine freitragende Montage und zur Fixierung von relativ grossen und schweren Kabeln und Rohren. Die Befestigungsschienen können in relativ grossen Längen hergestellt werden und dann auf die gewünschte Länge geschnitten werden.

Ein Ausführungsbeispiel der Erfindung und dessen Verwendung wird nun unter Bezugnahme auf die Zeichnung beschrieben. Es zeigt:
- Figur 1: das Profil der Befestigungsschiene,
- Figur 2: die Befestigungsschiene von oben gesehen,
- Figur 3: die Befestigung eines Kabels oder Rohres mit Kabelbindern,
- Figur 4: ein handelsüblicher Schnellverlegerbügel und
- Figur 5: die Befestigung eines Ordnungstrennbolzens.

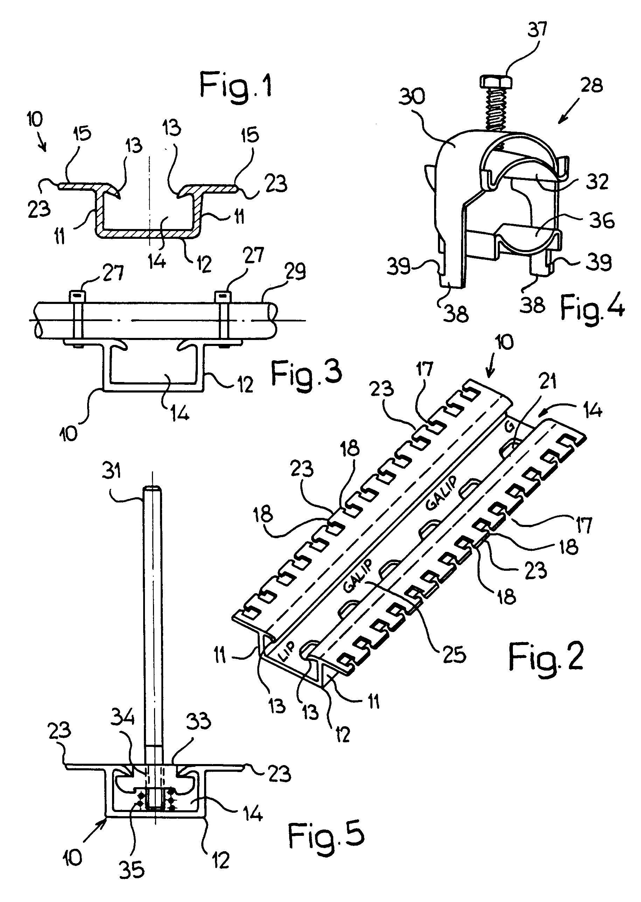

Die in den Figuren 1 und 2 dargestellte Befestigungsschiene 10 besitzt einen Schienenkörper 12 mit U-förmigem Profil, wobei die Schenkel 11 einen Kanal 14 seitlich begrenzen. Jeder Schenkel 11 besitzt an seinem freien Ende eine nach innen gerichtete Verlängerung 13 und eine nach aussen gerichtete Verlängerung 15. Das Profilmaterial kann beispielsweise Aluminium oder eine Aluminiumlegierung sein.

Nach der Herstellung des Aluminiumprofils erfolgt eine Stanzoperation, mit welcher die Schlitze 17, bzw. Finger 23, und die Langlöcher 21 gebildet werden. Die Finger 23 weisen am äusseren Ende Auskragungen 18 auf. Mit der Bezugsziffer 25 ist eine Prägung bezeichnet.

Die Befestigung der Kabel 29 und Rohre kann je nach Bedarf durch die üblichen Kabelbinder 27 (Fig. 4) oder sogenannten Schnellverlegerbügeln 28 (Fig. 5) erfolgen. In der Regel wird man für relativ kleine Kabeldurchmesser Kabelbinder 27 und für grosse Durchmesser Schnellverlegerbügel 28 verwenden. Als Schnellverlegerbügel wird eine im Handel erhältliche Befestigungsvorrichtung bezeichnet, welche in eine Schiene einsetzbare Füsse aufweist und einen das Kabel oder Rohr umfassenden Oberteil besitzt.

Wie Figur 3 zeigt, wird der Kabelbinder 27 je nach Kabel- oder Rohrdurchmesser um einen oder mehrere Finger 23 geführt und angezogen. Dabei wird das Kabel 29 oder das Rohr auf die Befestigungsschiene 10 gedrückt und arretiert. Die Auskragungen 18 an den Fingern 23 verhindern, dass die Kabelbinder 27 bei Zug am Kabel 29 aushängen können.

Der in Figur 4 dargestellte handelsübliche Schnellverlegerbügel 28 besteht im wesentlichen aus einem U-förmigen Bügel 30, einer Druckplatte 32, einer Unterlage 36 und einer Spannschraube 37. Der Bügel 30 weist zwei Füsse 38 auf, mit welchen der Schnellverlegerbügel 28 in ein U-Profil 12 eingesetzt werden kann. Beim Anziehen der Spannschraube 37 wird das Kabel oder das Rohr festgeklemmt und die Haken 39 greifen an den Verlängerungen 13 an, um den Schnellverlegerbügel 28 fest mit der Befestigungsschiene 10 zu verbinden.

In Figur 5 ist ein Ordnungstrennbolzen 31 und seine Befestigung mittels eines Nutensteins 33 im U-Profil 12 dargestellt.

Zur Befestigung wird der Nutenstein 33, welcher eine Gewindebohrung 34 aufweist und mit einer Feder 35 verbunden ist, von oben in das U-Profil 12 gedrückt, worauf er durch die Feder 35 festgehalten wird. Er ist längsverschiebbar, kann aber durch Einschrauben des Ordnungstrennbolzens 31 in der gewünschten Lage fixiert werden.

## Patentansprüche

1. Befestigungsschiene (10) zur Befestigung von Gegenständen, insbesondere von Kabeln oder Rohren mit einem Schienenkörper (12) von U-förmigem Profil, welcher einen Kanal (14) zur Aufnahme von Schnellverlegerbügeln, Ordnungstrennbolzen oder dergleichen aufweist, eine Auflegefläche für die zu befestigenden Gegenstände besitzt, wobei jeder Schenkel (11) des U eine nach innen gerichtete Verlängerung aufweist, dadurch gekennzeichnet, dass der Schienenkörper (12) mit Fingern (23) versehen ist, welche entlang der Schenkel (11) des U angeordnet sind und praktisch parallel zur Auflagefläche seitlich nach aussen ragen.

2. Befestigungsschiene nach Anspruch 1, dadurch gekennzeichnet, dass die Finger (23) von den Enden der Schenkel (11) des U nach aussen ragen.

3. Befestigungsschiene nach Anspruch 2, dadurch gekennzeichnet, dass die Finger (23) an ihren äusseren Enden Auskragungen (18) aufweisen.

4. Befestigungsschiene nach einem der Ansprüche 1 bis 3, dadurch gekennzeichnet, dass der Schienenkörper am Boden eine Vielzahl von in Abständen voneinander angeordneten Löchern (19), vorzugsweise Langlöchern, aufweist.

5. Befestigungsschiene nach einem der Ansprüche 1 bis 4, dadurch gekennzeichnet, dass sie aus einem Profil aus Aluminium oder aus einer Aluminiumlegierung besteht.

## Claims

1. A hanger (10) for securing articles, more particularly cables or pipes, the hanger having a U-section body (12) which has a channel (14) adapted to receive quick-laying clips or clamps, marker studs or the like, and a support surface for the articles to be secured, each arm (11) of the channel section having an inwardly directed prolongation, characterised in that the hanger body (12) has fingers (23) which are disposed along the arms (11) and project outwards laterally and substantially parallel to the support surface.

2. A hanger according to claim 1, characterised in that the fingers (23) project outwards from the ends of the arms (11) of the U.

3. A hanger according to claim 2, characterised in that the fingers (23) have projections (18) at their outer ends.

4. A hanger according to any of claims 1 to 3, characterised in that the base of the body (12) is formed with a plurality of spaced-apart and preferably elongate apertures (19).

5. A hanger according to any of claims 1 to 4, characterised in that it consists of a section member made of aluminium or an alloy thereof.

## Revendications

1. Rail de fixation (10) pour la fixation d'objets, en particulier de câbles ou de canalisations, comprenant un corps de rail (12) profilé en U qui présente une gorge (14) pour recevoir des attaches de pose rapide, des tiges séparatrices de classement ou similaires, une surface d'appui pour les objets à fixer, chaque aile (11) de l'U présentant un prolongement dirigé vers l'intérieur, caractérisé en ce que le corps de rail (12) est muni de doigts (23) qui sont disposés le long des ailes (11) de l'U et qui font saillie latéralement vers l'extérieur dans une direction pratiquement parallèle à la surface d'appui.

2. Rail de fixation selon la revendication 1, caractérisé en ce que les doigts (23) font saillie vers l'extérieur à partir des extrémités des ailes (11) de l'U.

3. Rail de fixation selon la revendication 2, caractérisé en ce que les doigts (23) présentent des saillies (18) à leur extrémité externe.

4. Rail de fixation selon l'une quelconque des revendications 1 à 3, caractérisé en ce que le corps de rail présente, au fond, une multiplicité de trous (19), de préférence de trous oblongs, situés à distance les uns des autres.

5. Rail de fixation selon l'une quelconque des revendications 1 à 4, caractérisé en ce qu'il est constitué par un profilé en aluminium ou en un alliage d'aluminium.
